# EUROPEAN PATENT APPLICATION

(11) **EP 2 565 333 A1**
(43) Date of publication of application: **06.03.2013**
(21) Application number: 10850709.6
(22) Date of filing: 28.04.2010
(51) Int. Cl.: E02F 9/20, H02J 7/00, H02M 5/293, H02M 7/219

(54) **CONTROL DEVICE FOR HYBRID CONSTRUCTION MACHINE**

(71) Applicant: Nabtesco Corporation, Tokyo 102-0093 (JP)
(72) Inventor: NAKAMURA, Kazuhito, Kobe-shi, Hyogo 651-2271 (JP); YAMAMOTO, Kosai, Kobe-shi, Hyogo 651-2271 (JP)
(74) Representative: Hedges, Martin Nicholas
(86) International application number: PCT/JP2010/057558
(87) International publication number: WO 2011/135691

(57) **Abstract**

[Object] To downsize a hybrid construction machine and to make a rotation electric motor of the construction machine operable immediately following the start-up of an engine.

[Means to Achieve the Object] A generator 5 connected to an engine 2 generates AC power. A converter 5 is connected to the generator 5, and an inverter 32 for controlling the electric power to a rotation electric motor 18 is connected to the converter 5. The converter 30 and the inverter 32 are formed of IGBTs connected between power supply lines 34r, 34s, 34t and the rotation electric motor 18. The AC power from the generator 5 is converted directly to AC power which can be supplied to the rotation electric motor 18.

## Description

### Technical Field

This invention relates to a control system for a hybrid construction machine driven by hydraulic pressure and electric power.

### Background Art

A hybrid construction machine control system is known, in which an engine is used to drive a hydraulic pump, which pump, in turn, drives a boom and the like of the construction machine, and the engine further drives a generator to generate AC power with which a rotatory carriage of the construction machine on which the boom, for example, is mounted is rotated. An example of such hybrid construction machine control system is disclosed in Patent Literature 1.

According to the technology disclosed in Patent Literature 1, AC power generated by a generator is rectified by a converter and smoothed by a smoothing capacitor into DC power. The DC power is converted to AC power in an inverter for application to a rotation electric motor which drives the rotation carriage to rotate.

### Prior Art Literatures

### Patent Literature

Patent Literature 1: JP2008-88660A

### Summary of Invention

### Problem to be Solved by the Invention

According to the technology disclosed in Patent Literature 1, the AC power generated by the generator must be first converted into DC power. For that purpose, a smoothing capacitor of large capacity must be used, which makes the control system large in size. Usually, electrolytic capacitors are used as a large-capacity smoothing capacitor. Electrolytic capacitors use electrolyte, so that the capacitance value greatly changes with time. Electrolytic capacitors exhibit a problem in length of life thereof under temperature and/or vibration conditions to which construction machines are subjected. Also, in order for the rotation electric motor to be able to rotate after the engine is started, circuitry is required for initial charging of a smoothing capacitor from DC power rectified by the converter, which not only increases the size and cost of the control system, but also makes it impossible to rotate the construction machine immediately after the start-up of the engine.

An object of the present invention is to provide a hybrid construction machine control system having a small size, a low cost and high reliability and still having ability to drive the rotation electric motor immediately after the start-up of the engine.

### Solution to Problem

According to an embodiment of the invention, a hybrid construction machine control system includes a generator. The generator is coupled to an engine and generates AC power. The AC power is preferably poly-phase power having plural phases. It should be noted that the engine drives also a hydraulic pump, as will be described later. A first electric power conversion device is connected to the generator. The first electric power conversion device may be a converter, for example. A second electric power conversion device is connected to the first electric power conversion device. The second electric power conversion device controls the power to an electric motor for rotation. The second electric power conversion device may be an inverter, for example. The first and second electric power conversion devices include a plurality of groups of switching devices disposed between the respective power lines of the generator and the rotation electric motor. The switching device groups convert the AC power from the generator directly into AC power which can be supplied to the rotation electric motor, to thereby control the rotation of the rotation electric motor. The AC power from the generator supplied to the first electric power conversion device may be poly-phase power, e.g. three-phase power, and the power supplied from the second electric power conversion device to the rotation electric motor may be also poly-phase power, e.g. three-phase power. The switching device groups are controlled by control means for the first and second electric power conversion devices.

With this arrangement, the AC power from the generator is converted directly into AC power that can be supplied to the rotation electric motor, by the first and second electric power conversion devices, which enables no smoothing capacitors to be used, which, in turn, makes it possible for the control system to be downsized. In addition, since no smoothing capacitors are used, no time is required for smoothing capacitors to be charged, which makes it possible to drive the rotation electric motor immediately after the start-up of the engine to rotate the construction machine.

The engine may drive a hydraulic pump, too. In this case, the generator is constructed such that it can be driven also as an electric motor. The electric motor supplements power for driving the hydraulic pump when it is driven by the engine. The AC power regenerated from the rotation electric motor is converted directly to AC power for driving the generator by the switching device groups of the first and second power conversion devices to thereby drive the generator. The switching device groups may be arranged to be able to bidirectionally transmit power.

With this arrangement, the generator can be driven from the regenerated power from the rotation electric motor. Since the AC power regenerated from the rotation electric motor can be converted directly to AC power for driving the generator, the efficiency can be improved.

If the AC power regenerated from the rotation electric motor is larger than the AC power required by the generator, the surplus AC power may be stored in a charge storage device disposed between the first and second electric power conversion devices.

If a charge storage device is used for rectifying and smoothing AC power from a generator as done in prior art systems, loss is caused by charging and discharging the charge storage device. However, with the above-described arrangement, since the charge storage device is charged only when surplus power is available, occurrence of loss is reduced, which improves the efficiency of the hybrid construction machine and also prolongs the life of the charge storage device.

It may be arranged such that, if the AC power regenerated from the rotation electric motor is less than the AC power required by the generator, the shortage of AC power is covered by the charge storage device. This arrangement makes it possible for the generator to be driven in a required manner even if the AC power regenerated from the rotation electric motor is less than the AC power required by the generator.

Further, it may be so arranged that, when AC power is regenerated from the rotation electric motor when the generator is in an assist mode in which the generator supplements power of the engine for driving the hydraulic pump, the regenerated AC power may be preferentially supplied to the generator.

With this arrangement, the hydraulic pump is driven with constant power in the assist mode, and, therefore, the amount of output of the hydraulic pump does not vary, whereby systems including an arc actuator are not adversely affected. Further, since the charging and discharging of the charge storage device does not take place, losses associated therewith can be reduced, which improves the efficiency.

### Advantageous Effects of the Invention

As described above, according to the present invention, no smoothing capacitors are required for driving a rotation electric motor. This makes it possible to downsize a hybrid construction machine and further to operate the rotation electric motor of the hybrid construction machine immediately following the start-up of an engine.

### Brief Description of Drawings

Figure 1 is a block diagram of a hybrid construction machine according to an embodiment of the present invention.
Figure 2 is a circuit diagram of an indirect matrix converter for use in the hybrid construction machine shown in Figure 1.

### Description of Embodiments

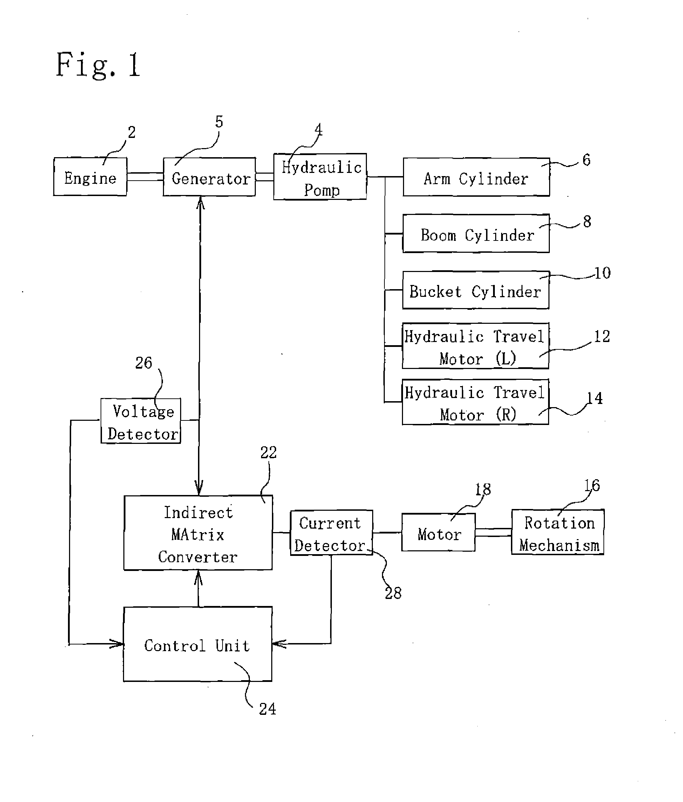

As shown in Figure 1, a hybrid construction machine according to an embodiment of the present invention includes an engine 2. The engine 2 drives a hydraulic pump 4 and a generator 5. The hydraulic pump 4 functions as a driving source for a plurality of actuators of the hybrid construction machine, including, for example, an arm cylinder 6, a boom cylinder 8, a bucket cylinder 10, a hydraulic travel motor (L) 12 and a hydraulic travel motor (R)14.

An arm driven by the arm cylinder 6, a boom driven by the boom cylinder 8 and a bucket driven by the bucket cylinder 10 are mounted on a top rotating carriage of the hybrid construction machine. The hydraulic travel motor (L) 12 and the hydraulic travel motor (R) 14 drive left-hand side and right-hand side crawlers, respectively, of a traveler which rotatably mounts the top rotating carriage.

An electric motor, e.g. a three-phase motor 18, is coupled via a rotation mechanism 16 to the top rotating carriage in order to rotate it. The generator 5 is coupled to the engine 2 to provide power for rotating the three-phase motor 18. The generator 5 may be a three-phase AC generator generating three-phase AC power, for example, and is operable also as a three-phase motor. When the generator 5 operates as a three-phase motor, it drives, together with the engine 2, the hydraulic pump 4.

The AC power generated by the generator 5 is applied to an indirect matrix converter 22 where it is converted in frequency and voltage, and, then, applied to the three-phase motor 18. The indirect matrix converter 22 is controlled by a control unit 24. For use in this control, the output voltage of the generator 5 is detected by a voltage detecting unit 26, and the output current of the indirect matrix converter 22 is detected by a current detecting unit 28. The results of detection in the voltage detecting unit 26 and the current detecting unit 28 are supplied to the control unit 24.

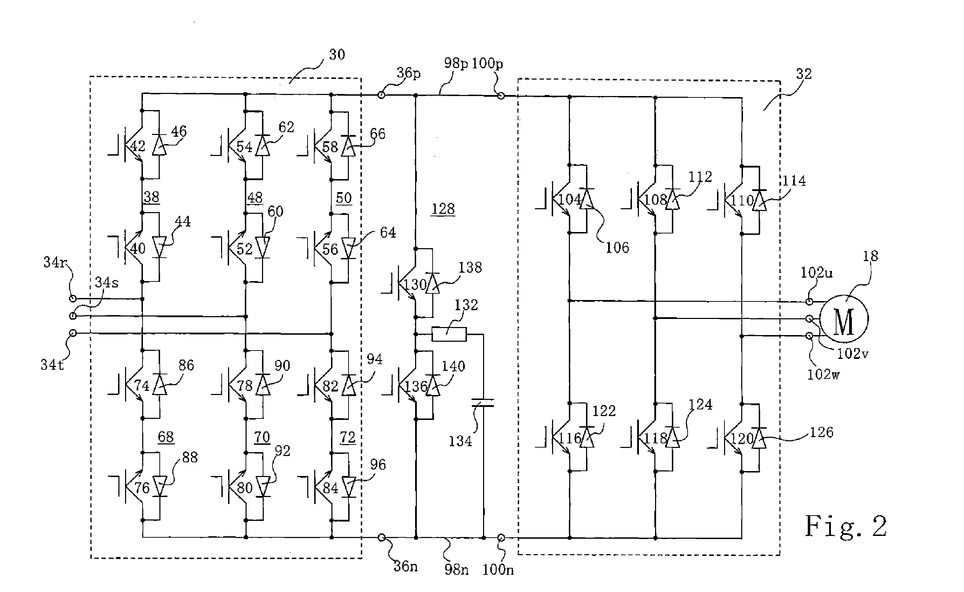

As shown in Figure 2, the indirect matrix converter 22 includes a first power conversion device 31, e.g. a converter 30, and a second power conversion device, e.g. an inverter 32.

The converter 30 has three-phase AC power supply input terminals 34r, 34s and 34t, and two intermediate DC output terminals 36p and 36n. A switching device, e.g. a bidirectional switching circuit 38, is connected between the power supply terminal 34r and the intermediate DC output terminal 36p. The bidirectional switching circuit 38 has an IGBT 40 having its collector connected to the power supply input terminal 34r, and an IGBT 42 having its collector connected to the intermediate DC output terminal 36p. The emitters of the IGBTs 40 and 42 are connected together. Diodes 44 and 46 are connected in anti-parallel with the collector-emitter paths of the IGBTs 40 and 42, respectively. When the IGBT 40 is conductive, current from the power supply input terminal 34r flows through the IGBT 40 and the diode 46 to the intermediate DC output terminal 36p. When the IGBT 42 is conductive, current from the intermediate DC output terminal flows through the IGBT 42 and the diode 44 to the power supply input terminal 34r.

Switching circuits 48 and 50 are connected between the power supply input terminals 34s and 34t and the intermediate DC output terminal 36p, respectively. The bidirectional switching circuits 48 and 50, like the switching circuit 38, has IGBTs 52 and 54 and IGBTs 56 and 58, respectively, and also anti-parallel diodes 60 and 62 and anti-parallel diodes 64 and 66, respectively.

Similarly, bidirectional switching circuits 68, 70 and 72 are connected between the respective ones of the power supply input terminals 34r, 34s and 34t and the intermediate DC output terminal 36n, respectively. The respective ones of the bidirectional switching circuits 68, 70 and 72 include two IGBTs 74 and 76, two IGBTs 78 and 80 and two IGBTs 82 and 84, and two diodes 86 and 88, two diodes 90 and 92, and two diodes 94 and 96.

It is seen that the converter 30 is formed of twelve IGBTs and twelve diodes. The converter 30 develops an intermediate DC voltage between the intermediate DC output terminals 36p and 36n.

The inverter 32 has an intermediate DC input terminal 100p connected to the intermediate DC output terminal 36p through an intermediate DC power supply line 98p, and also an intermediate DC input terminal 100n connected to the intermediate DC output terminal 36n through an intermediate DC power supply line 98n. In addition, the inverter 32 has AC output terminals 102u, 102v and 102w connected to the respective phases of the three-phase electric motor 18.

A semiconductor switching device, e.g. an IGBT 104, is connected between the intermediate DC input terminal 100p and the AC output terminal 102u. The collector of the IGBT 104 is connected to the intermediate DC input terminal 100p, and its emitter is connected to the AC output terminal 102u. A diode 106 is connected in anti-parallel with the collector-emitter path of the IGBT 104. Similarly, IGBTs 108 and 110 are connected between the intermediate DC input terminal 100p and the respective ones of the AC output terminals 102v and 102w. Anti-parallel diodes 112 and 114 are connected to the IGBTs 108 and 110, respectively.

Further, IGBTs 116, 118 and 120 are connected between the respective ones of the AC output terminals 102u, 102v and 102w and the intermediate DC input terminal 100n, respectively. The IGBTs 116, 118 and 120 have their collectors connected to the AC output terminals 102u, 102v and 102w, respectively, and have their emitters connected to the intermediate DC input terminal 100n. Diodes 122, 124 and 126 are connected in anti-parallel with the collector-emitter paths of the IGBTs 116, 118 and 120, respectively. Thus, the inverter 32 has six IGBTs.

A charge-discharge circuit 128 is connected between the intermediate DC power supply lines 98p and 98n. The charge-discharge circuit 128 includes an IGBT 130 having its collector connected to the intermediate DC power supply line 98p. The emitter of the IGBT 130 is connected to the intermediate DC power supply line 98n through a series connection of a resistor 132 and a charge-discharge capacitor 134. The charge-discharge capacitor 134 may be a charge storage device, e.g. an EDLC (electric double-layer capacitor) and an LIC (lithium-ion capacitor). An IGBT 136 is connected in parallel with the series circuit of the resistor 132 and the charge-discharge capacitor 134. The IGBT 136 has its collector connected to the resistor 132 and has its emitter connected to the intermediate DC power supply line 98n. Diodes 138 and 140 are connected in anti-parallel with the collector-emitter paths of the IGBTs 130 and 136, respectively.

The IGBTs of the converter 30 and the inverter 32 are controlled by the control unit 24 shown in Figure 1 and provide AC power having a required frequency and a required voltage to the three-phase motor 18. Since the described system converts three-phase AC electric power directly to desired AC power by means of the converter 30 and the inverter 32, or, in other words, since the system does not employ a technology of converting AC power to DC power by means of a converter and a smoothing capacitor and, thereafter, converting the resulting DC power to desired AC power by means of an inverter, there is no need to connect a smoothing large-capacitance capacitor between the intermediate DC power supply lines 98p and 98n. This makes it possible to downsize the indirect matrix converter 22, whereby the hybrid construction machine employing this indirect matrix converter 22 can also be downsized. In addition, since it is not necessary to wait a smoothing capacitor to be fully charged after the start-up of the engine 2, the three-phase electric motor 18 can be activated without delay.

In order to rotate the top rotating carriage in response to a command (not shown) from a hybrid construction machine operator, the control unit 24 controls the indirect matrix converter 22 in such a manner as to supply AC power having a desired frequency and a desired voltage to the three-phase motor 18. The control unit 24, in this case, preferentially supplies power from the generator 5 to the rotation motor. Specifically, if the control unit 24 judges, from the command from the operator and the results of detection made by a pole position sensor (not shown) of the three-phase motor 18, and the voltage detecting unit 26 and/or the current detecting unit 28, that the power supplied to the three-phase motor 18 is insufficient, the control unit 24 makes the capacitor 134 discharge and adds the power from the capacitor 134 to the power supplied to the three-phase motor 18. Further, if the control unit 24 judges, from the command from the operator and the results of detection made by the pole position sensor of the three-phase motor 18, and the voltage detecting unit 26 and/or the current detecting unit 28, that the power supplied to the three-phase motor 18 is more than required, the control unit 24 makes the surplus power be stored on the capacitor 134.

The inverter 32 includes the diodes 106, 112, 114, 122, 124 and 126 connected in anti-parallel with the IGBTs 104, 108, 110, 116, 118 and 120, respectively, and the converter 30 includes the bidirectional switching circuits 38, 48, 50, 68, 70 and 72. By controlling them by the control unit 24, the three-phase motor 18 can be regeneratively controlled to thereby develop AC power at the power supply input terminals 34r, 34s and 34t.

An assist mode can be set in which the power from the engine 2 for driving the hydraulic pump 4 is supplemented. In the assist mode, the regenerated AC power from the indirect matrix converter 22 is supplied to the generator 5 so as to make the generator 5 operate as a three-phase motor. This assists the engine 2 in driving the hydraulic pump 4. If the power regenerated is larger than the power required for assisting the engine 2, which is done by operating the generator 5 as a motor, the IGBT 130 in the charge-discharge circuit 128 is made conductive to charge the capacitor 134 with the surplus power. The IGBT 136 is made conductive when the charge-discharge capacitor 134 is discharged to prevent the capacitor 134 from being overcharged.

By keeping the charge-discharge capacitor 134 charged, it is possible to discharge the capacitor 134 through the diode 138 to supplement the regenerated power obtained by the regeneration from the three-phase motor 18, when the regenerated power is smaller than required for operating the generator 5 as the motor. Like this, since the charge-discharge capacitor 134 is charged only when surplus power is available, and is discharged only when the regenerated power is not enough, the charging and discharging of the capacitor 134 does not take place frequently and, therefore, loss associated with the charging and discharging is small.

The control unit 24 makes judgment, based on the command from the operator of the hybrid construction machine and the results of detection made a power detector (not shown) associated with the capacitor 134 and the voltage detecting unit 26 and/or the current detecting unit 28, as to whether the regenerated power from the three-phase motor 18 is insufficient or surplus power is available.

In the described embodiment, the generator 5 is able to operate also as an electric motor. Instead, a separate electric motor may be used to assist the driving of the hydraulic pump 4, with the motor driven from the regenerated power from the indirect matrix converter 22. An electric motor and a hydraulic pump may be provided for each of the arm cylinder 6, the boom cylinder 8, the bucket cylinder 10, the hydraulic travel motor (L) 12 and the hydraulic travel motor (R) 14, in which the power distribution to the respective electric motors is adjusted.

## Claims

1. A hybrid construction control system comprising:
a generator connected to an engine, for generating AC power;
a first power conversion device connected to said generator; and
a second power conversion device connected to said first power conversion device, for controlling power to a rotation electric motor;
wherein:
said first and second power conversion devices each include a plurality of switching device groups connected between respective ones of power supply lines of said generator and said rotation electric motor, said switching device groups converting AC power from said generator directly to AC power which can be supplied to said rotation electric motor for controlling the rotation of said rotation electric motor.

2. The hybrid construction machine control system according to Claim 1, wherein:
said engine also drives a hydraulic pump, and said generator is arranged to be operable also as an electric motor to supplement power from said engine for driving said hydraulic pump; and
AC power regenerated from said rotation electric motor is converted by said switching device groups of said first and second conversion devices directly into AC power for driving said generator to thereby drive said generator.

3. The hybrid construction machine control system according to Claim 2, wherein, when AC power regenerated from said rotation electric motor is larger than AC power required by said generator, surplus AC power is stored on a charge storage device connected between said first and second power conversion devices.

4. The hybrid construction machine control system according to Claim 3, wherein, when the AC power regenerated from said rotation electric motor is smaller than the AC power required by said generator, the shortage is supplied by said charge storage device.

5. The hybrid construction machine control system according to Claim 3, wherein, when said generator is in an assist mode in which said generator supplements the power of said engine for driving said hydraulic pump with AC power being regenerated from said rotation electric motor, said regenerated AC power is preferentially supplied to said generator.

6. The hybrid construction machine control system according to any one of Claims 2-5, wherein said charge storage device is a capacitor.

7. The hybrid construction machine control system according to any one of Claims 2-6, wherein, in place of a system in which said hydraulic pump is driven by said engine, a motor-driven hydraulic pump driven by an inverter connected to an AC output of an electric motor and supplied with an AC input is employed.
